# EUROPÄISCHE PATENTSCHRIFT

(11) **EP 3 258 571 B1**
(45) Veröffentlichungstag und Bekanntmachung des Hinweises auf die Patenterteilung: **24.02.2021**
(21) Anmeldenummer: 17173970.9
(22) Anmeldetag: 01.06.2017
(51) Int. Cl.: H02J 50/80

(54) **ENERGIEÜBERTRAGUNGSSYSTEM UND VERFAHREN ZUM BETRIEB EINES ENERGIEÜBERTRAGUNGSSYSTEMS**
ENERGY TRANSFER SYSTEM AND METHOD FOR OPERATING AN ENERGY TRANSFER SYSTEM
SYSTÈME DE TRANSFERT D'ÉNERGIE ET SON PROCÉDÉ DE FONCTIONNEMENT

(30) Priorität: 15.06.2016 DE 102016210634
(43) Veröffentlichungstag der Anmeldung: 20.12.2017
(73) Patentinhaber: Robert Bosch GmbH, 70442 Stuttgart (DE)
(72) Erfinder: Gonda, Martin, 77815 Buehl (DE)

(56) Entgegenhaltungen:
- DE-A1-102011 084 485
- DE-A1-102011 086 826
- DE-A1-102013 226 251
- DE-A1-102014 217 965
- DE-A1-102015 116 397
- US-A1- 2016 079 802

## Beschreibung

### Stand der Technik

Aus dem Stand der Technik sind Induktionsladesysteme bekannt, mit einer Handwerkzeugmaschinenvorrichtung und mit zumindest einer Ladevorrichtung, welche zu einem induktiven Laden der Handwerkzeugmaschinenvorrichtung vorgesehen ist.

Die DE 10 2013 226 251 A1 offenbart eine Handwerkzeugakkuladevorrichtung mit einer Primärinduktionsiadeeinheit, um Handwerkzeugakkuvorrichtungen mit zumindest zwei unterschiedlichen Nennspannungen zu laden. Dabei werden auch Ausgestaltungen vorgeschlagen, wobei jeweils die Handwerkzeugakkuladevorrichtung und die Handwerkzeugakkuvorrichtung eine Kommunikationseinheit aufweist, die dazu vorgesehen ist, eine Kenngröße einer Nennspannung und/oder eine Zellenzahl der Handwerkzeugakkuvorrichtung zu empfangen und/oder auszulesen, um einen Ladevorgang zu steuern und/oder zu regeln.

Die DE 10 2014 217 965 A1 offenbart ein Aufbewahrungssystem mit zumindest einer Aufbewahrungsvorrichtung zur Aufbewahrung von Arbeitskleidung mit zumindest einer kabelgebundenen und/oder kabellosen Ladevorrichtung, die dazu vorgesehen ist, zumindest elektrische Energie an zumindest eine Energiespeichereinheit der Arbeitskleidung zu übertragen. Die vorgeschlagenen Kommunikationseinheiten ermöglichen eine Kommunikation zwischen der Aufbewahrungsvorrichtung und/oder einer externen Einheit und der Arbeitskleidung. Dabei wird auch eine Steuerung der Funktionen der Arbeitskleidung und/oder eine individuelle Einstellung von Kenngrößen der Arbeitskleidung mittels der externen Einheit beschrieben.

Aus der US 2016/079802 A1 gehen ferner ein Elektrogerät, eine Kontrolleinheit zur drahtlosen Kommunikation für Systemupdates und zum Laden des Elektrogeräts, eine Systemverwaltungseinheit sowie Methoden zur Steuerung der drahtlosen Kommunikation und zur Aktualisierung des gebildeten Systems hervor. Die Kontrolleinheit prüft dabei den Zustand des Elektrogeräts und steuert einen Lade- und/oder Updatevorgang des Elektrogeräts.

Ausgehend vom Stand der Technik ist es Aufgabe der Erfindung, ein Induktionsladesystem bereitzustellen, dass sowohl eine induktive Aktualisierung von Softwarekomponenten der Handwerkzeugmaschinenvorrichtung als auch der Ladevorrichtung ermöglicht.

### Offenbarung der Erfindung

Die Erfindung ist in den unabhängigen Ansprüchen definiert. Die Erfindung geht aus von einem Induktionsladesystem mit zumindest einer Handwerkzeugmaschinenvorrichtung, welche einen Energiespeicher und eine Energieempfängereinheit aufweist, die zusätzlich als eine erste Kommunikationseinheit dient, und mit zumindest einer Ladevorrichtung, welche zu einem induktiven Laden der Handwerkzeugmaschinenvorrichtung vorgesehen ist und welche zumindest eine Energieübertragungseinheit aufweist, die zusätzlich als eine zweite Kommunikationseinheit dient, wobei die erste Kommunikationseinheit und die zweite Kommunikationseinheit dazu vorgesehen sind, zumindest zu einer Übertragung von Daten drahtlos miteinander zu kommunizieren, wobei die Energieübertragungseinheit dazu vorgesehen ist, Energie beim induktiven Laden an die Handwerkzeugmaschinenvorrichtung zu übertragen, und die Energieempfängereinheit dazu vorgesehen ist, Energie beim induktiven Laden von der Ladevorrichtung zu empfangen.

Es wird vorgeschlagen, dass die Ladevorrichtung eine als Datenschnittstelle ausgebildete, drahtlose Verbindungsschnittstelle zum Empfang von Programmierdaten eines externen, elektronischen Geräts aufweist, wobei die zweite Kommunikationseinheit die Programmierdaten an die erste Kommunikationseinheit zur Aktualisierung von Softwarekomponenten der Handwerkzeugmaschinenvorrichtung induktiv überträgt, und dass die Handwerkzeugmaschinenvorrichtung eine als Datenschnittstelle ausgebildete, drahtlose Verbindungsschnittstelle zum Empfang von Programmierdaten des externen, elektronischen Geräts aufweist, wobei die erste Kommunikationseinheit die Programmierdaten an die zweite Kommunikationseinheit zur Reprogrammierung der Ladevorrichtung überträgt.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem Induktivladesystem soll ein System verstanden werden, welches in zumindest einem Betriebszustand zu einer induktiven Übertragung von Energie, insbesondere elektrischer Energie, vorgesehen ist. Die Energieübertragung kann dabei insbesondere über Distanzen von wenigen Millimetern, insbesondere weniger als 0,1 mm, bis zu mehreren Zentimetern, insbesondere mehr als 10 cm, erfolgen. Insbesondere ist im vorliegenden Fall zumindest die Ladevorrichtung zu einer induktiven Übertragung von Energie auf die Handwerkzeugmaschinenvorrichtung vorgesehen.

Unter einer "Handwerkzeugmaschinenvorrichtung" soll dabei insbesondere zumindest ein Teil und/oder eine Unterbaugruppe einer Handwerkzeugmaschine verstanden werden. Insbesondere kann die Handwerkzeugmaschinenvorrichtung auch die gesamte Handwerkzeugmaschine umfassen. Zudem umfasst die Handwerkzeugmaschinenvorrichtung zumindest eine als Induktivität und/oder als elektrischer Schwingkreis ausgebildete Energieempfängereinheit, welche dazu vorgesehen ist, Energie, insbesondere von der Ladevorrichtung, zu empfangen. Vorteilhaft umfasst die Handwerkzeugmaschinenvorrichtung ferner zumindest einen mit der Energieempfängereinheit elektrisch verbundenen Energiespeicher. Unter einem "Energiespeicher" soll dabei insbesondere eine Einheit verstanden werden, welche zum Speichern elektrischer Energie vorgesehen ist. Vorzugsweise umfasst der Energiespeicher dazu zumindest ein Energiespeicherelement. Besonders bevorzugt ist das Energiespeicherelement wiederaufladbar, vorteilhaft zumindest 100-mal. Das Energiespeicherelement kann dabei als beliebiges Energiespeicherelement ausgebildet sein, insbesondere als Kondensator, als Brennstoffzelle, als Batterie und/oder vorzugsweise als Akkumulator. Darüber hinaus soll unter einer "Handwerkzeugmaschine" eine, insbesondere handgehaltene, werkstückbearbeitende Maschine, wie beispielsweise ein Akkuschrauber, ein Akkubohrer, eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden.

Ferner soll unter einer "Ladevorrichtung" eine Vorrichtung verstanden werden, welche zum induktiven Laden der Handwerkzeugmaschinenvorrichtung, insbesondere des Energiespeichers der Handwerkzeugmaschinenvorrichtung, vorgesehen ist. Insbesondere umfasst die Ladevorrichtung dabei zumindest eine, vorteilhaft als Induktivität und/oder als elektrischer Schwingkreis ausgebildete, Energieübertragungseinheit, welche dazu vorgesehen ist, Energie an die Handwerkzeugmaschinenvorrichtung, insbesondere die Energieempfängereinheit der Handwerkzeugmaschinenvorrichtung, zu übertragen. Die Ladevorrichtung kann dabei als beliebige Ladevorrichtung ausgebildet sein, wie beispielsweise als Ladegerät, als Ladeschale und/oder als Ladeplatte und/oder als Teil eines Ladegeräts, als Teil einer Ladeschale und/oder als Teil einer Ladeplatte.

Des Weiteren soll unter einer "Kommunikationseinheit" eine als Sende- und/oder Empfängereinheit ausgebildete Einheit verstanden werden, welche in zumindest einem Betriebszustand zu einer Übertragung und/oder zu einem Empfang von Daten vorgesehen ist. Dabei ist die erste Kommunikationseinheit dazu vorgesehen, Daten an die zweite Kommunikationseinheit zu übermitteln, und die zweite Kommunikationseinheit dazu vorgesehen, Daten an die erste Kommunikationseinheit zu übertragen. Vorteilhaft umfassen die erste Kommunikationseinheit und/oder die zweite Kommunikationseinheit eine Induktivität, insbesondere wenigstens eine Spule, und/oder einen elektrischen Schwingkreis. Hierdurch kann insbesondere eine vorteilhaft einfache Datenübertragung erreicht werden und/oder eine gleichbleibende elektromagnetische Verträglichkeit des Induktionsladesystems erreicht werden.

Insbesondere kann die Handwerkzeugmaschinenvorrichtung und/oder die Ladevorrichtung ferner zumindest eine Recheneinheit, insbesondere zur Verarbeitung und/oder Aufbereitung der Daten, umfassen. Unter einer "Recheneinheit" soll eine elektrische und/oder elektronische Einheit verstanden werden, welche einen Informationseingang, eine Informationsverarbeitung und eine Informationsausgabe aufweist. Vorteilhaft weist die Recheneinheit zumindest einen Prozessor, einen Speicher, ein Betriebsprogramm, Regelroutinen, Steuerroutinen und/oder Berechnungsroutinen auf. Durch diese Ausgestaltung des Induktionsladesystems kann vorteilhaft eine Effizienz und/oder eine Flexibilität verbessert werden. Insbesondere können dabei vorteilhaft einfach Daten zwischen einer Handwerkzeugmaschinenvorrichtung und einer Ladevorrichtung ausgetauscht werden, wobei vorteilhaft auf eine Demontage der Handwerkzeugmaschinenvorrichtung und/oder der Ladevorrichtung verzichtet werden kann. Somit können vorteilhaft Kosten gesenkt und/oder eine Betriebssicherheit verbessert werden.

Unter einem "externen, elektronischen Gerät" soll beispielsweise ein fest installiertes externes Gerät, insbesondere ein Desktop-PC, oder ein mobiles externes Gerät, insbesondere ein Notebook, ein Tablet, ein Smartphone oder ein gleichwertiges elektronisches Gerät, verstanden werden. Hierdurch können vorteilhaft externe Daten an die Handwerkzeugmaschinenvorrichtung und/oder die Ladevorrichtung zur Übertragung übermittelt werden.

Bevorzugt dienen die Daten zu einer Reprogrammierung der Ladevorrichtung, insbesondere einer Softwarekomponente der Ladevorrichtung und/oder eines Bootloaders der Ladevorrichtung, sowie zu einer Aktualisierung einer Softwarekomponente der Handwerkzeugmaschinenvorrichtung, wie beispielsweise einer Firmware, einer Software und/oder von EEPROM-Parametern. Hierdurch kann insbesondere eine vorteilhafte Aktualisierung der Softwarekomponenten erreicht werden.

Die erste Kommunikationseinheit und die zweite Kommunikationseinheit können jeweils zu einer bidirektionalen Übertragung der Daten vorgesehen sein, um eine wechselseitige Kommunikation zu erreichen. Alternativ oder zusätzlich könnte die Handwerkzeugmaschinenvorrichtung und/oder die Ladevorrichtung wenigstens ein, insbesondere akustisches, haptisches und/oder vorteilhaft optisches, Ausgabeelement umfassen, welches insbesondere dazu vorgesehen ist, Informationen über eine erfolgreiche und/oder eine fehlgeschlagene Übertragung von Daten auszugeben.

In einer besonders bevorzugten Ausgestaltung der Erfindung wird vorgeschlagen, dass die Handwerkzeugmaschinenvorrichtung und/oder die Ladevorrichtung zumindest einen Datenspeicher zur zumindest temporären Speicherung der Daten aufweist. Bevorzugt weist der Datenspeicher dabei zumindest ein permanentes und/oder semi-permanentes, insbesondere elektronisches, magnetisches und/oder optisches, Datenspeicherelement auf. Hierdurch können Daten vorteilhaft zur Übertragung und/oder zur weiteren Verarbeitung gespeichert und/oder zwischengespeichert werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

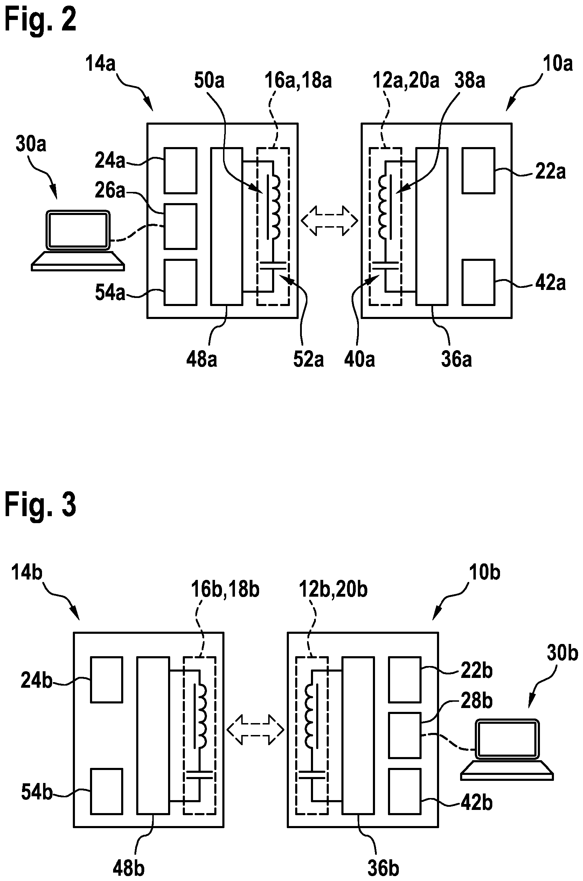

Insbesondere, die Figuren 2 bzw. 3 zeigen nicht alle Merkmale welche in den unabhängigen Ansprüchen definiert sind.

Es zeigen:
- Fig. 1: ein Induktionsladesystem mit einer Handwerkzeugmaschinenvorrichtung und einer Ladevorrichtung in einer perspektivischen Darstellung,
- Fig. 2: eine schematische Darstellung eines inneren Aufbaus der Handwerkzeugmaschinenvorrichtung und der Ladevorrichtung zur Datenübertragung von der Ladevorrichtung auf die Handwerkzeugmaschinenvorrichtung und
- Fig. 3: eine schematische Darstellung eines inneren Aufbaus der Handwerkzeugmaschinenvorrichtung und der Ladevorrichtung des Induktionsladesystems zur Datenübertragung von der Handwerkzeugmaschinenvorrichtung auf die Ladevorrichtung.

### Beschreibung der Ausführungsbeispiele

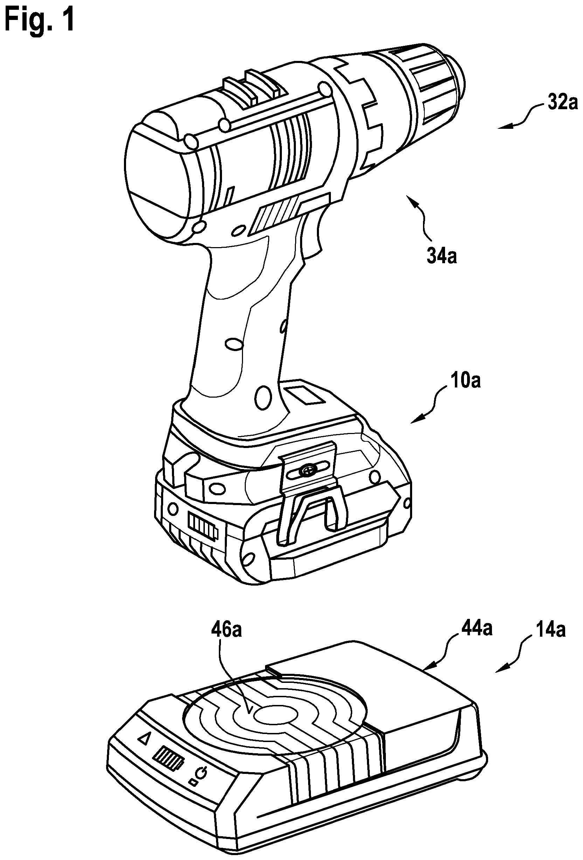

Figur 1 zeigt ein beispielhaftes induktivladesystem in einer perspektivischen Darstellung. Das Induktionsladesystem umfasst im vorliegenden Fall eine Handwerkzeugmaschine 32a. Die Handwerkzeugmaschine 32a ist beispielhaft als, insbesondere kabelloser, Akkuschrauber ausgebildet. Alternativ könnte eine Handwerkzeugmaschine jedoch auch als beliebige von einem Akkuschrauber abweichende Handwerkzeugmaschine ausgebildet sein.

Die Handwerkzeugmaschine 32a weist eine Bearbeitungsvorrichtung 34a auf. Im vorliegenden Fall ist die Bearbeitungsvorrichtung 34a dazu vorgesehen, eine Bohr- und/oder eine Schraubbearbeitung zu ermöglichen.

Die Handwerkzeugmaschine 32a weist zudem eine Handwerkzeugmaschinenvorrichtung 10a auf. Die Handwerkzeugmaschinenvorrichtung 10a ist separat von der Bearbeitungsvorrichtung 34a ausgebildet. Die Handwerkzeugmaschinenvorrichtung 10a ist als Energiespeichervorrichtung ausgebildet. Die Handwerkzeugmaschinenvorrichtung 10a ist als Akkupack ausgebildet. Die Handwerkzeugmaschinenvorrichtung 10a ist mit der Bearbeitungsvorrichtung 34a koppelbar. Im vorliegenden Fall kann die Handwerkzeugmaschinenvorrichtung 10a mittels einer Rastverbindung mit der Bearbeitungsvorrichtung 34a verbunden werden. Alternativ könnte ein Induktionsladesystem auch frei von einer Bearbeitungsvorrichtung sein und insbesondere lediglich eine als Energiespeichervorrichtung ausgebildete Handwerkzeugmaschinenvorrichtung umfassen. Ferner könnt eine Handwerkzeugmaschinenvorrichtung auch mit der Handwerkzeugmaschine identisch sein. In diesem Fall ist die Handwerkzeugmaschine und/oder die Handwerkzeugmaschinenvorrichtung frei von einer von einer Bearbeitungsvorrichtung separat ausgebildeten Energiespeichervorrichtung.

Die Handwerkzeugmaschinenvorrichtung 10a umfasst einen Energiespeicher 36a. Der Energiespeicher 36a ist wiederaufladbar. Der Energiespeicher 36a ist als Akkumulator ausgebildet. Der Energiespeicher 36a ist im vorliegenden Fall als Lithium-Ionen-Akkumulator ausgebildet. Der Energiespeicher 36a ist dazu vorgesehen, elektrische Energie zu speichern und insbesondere der Bearbeitungsvorrichtung 34a zur Verfügung zu stellen.

Zudem umfasst die Handwerkzeugmaschinenvorrichtung 10a gemäß Figur 2 eine Energieempfängereinheit 20a. Die Energieempfängereinheit 20a ist in einem unteren Bereich der Handwerkzeugmaschinenvorrichtung 10a, insbesondere auf einer der Bearbeitungsvorrichtung 34a abgewandten Seite der Handwerkzeugmaschinenvorrichtung 10a, angeordnet. Die Energieempfängereinheit 20a weist eine elektrische Verbindung mit dem Energiespeicher 36a auf. Die Energieempfängereinheit 20a ist als elektrischer Schwingkreis ausgebildet. Die Energieempfängereinheit 20a umfasst eine erste Induktivität 38a und einen, insbesondere mit der ersten Induktivität 38a in Reihe geschalteten, ersten Kondensator 40a. Alternativ könnte die Energieempfängereinheit 20a auch mehrere Induktivitäten und/oder Kondensatoren und/oder weitere Bauteile umfassen.

Darüber hinaus umfasst die Handwerkzeugmaschinenvorrichtung 10a eine erste Kommunikationseinheit 12a. Die erste Kommunikationseinheit 12a ist als Sende- und Empfängereinheit ausgebildet. Die erste Kommunikationseinheit 12a ist als drahtlose Kommunikationseinheit ausgebildet. Im vorliegenden Fall ist die erste Kommunikationseinheit 12a zumindest teilweise einstückig mit der Energieempfängereinheit 20a ausgebildet. Die erste Kommunikationseinheit 12a ist dabei mit der Energieempfängereinheit 20a identisch. Demnach ist die erste Kommunikationseinheit 12a als elektrischer Schwingkreis ausgebildet und umfasst insbesondere die erste Induktivität 38a und den, insbesondere mit der ersten Induktivität 38a in Reihe geschalteten, ersten Kondensator 40a. Die erste Kommunikationseinheit 12a ist in zumindest einem Betriebszustand zu einer Übertragung und zu einem Empfang von, insbesondere von Energie abweichenden, Daten vorgesehen.

Dazu umfasst die Handwerkzeugmaschinenvorrichtung 10a einen ersten Datenspeicher 22a. Der erste Datenspeicher 22a ist mit der ersten Kommunikationseinheit 12a verbunden. Der erste Datenspeicher 22a ist dabei als Permanentspeicher ausgebildet. Der erste Datenspeicher 22a dient zur zumindest temporären Speicherung der, insbesondere übertragenen und/oder der zu übertragenden, Daten.

Die Handwerkzeugmaschinenvorrichtung 10a umfasst ferner eine erste Recheneinheit 42a. Die erste Recheneinheit 42a umfasst eine erste Steuerelektronik, im vorliegenden Fall insbesondere mit einem Bootloader, zum Betrieb der Handwerkzeugmaschinenvorrichtung 10a. Die erste Recheneinheit 42a ist mit der ersten Kommunikationseinheit 12a verbunden. Zudem ist die erste Recheneinheit 42a mit dem ersten Datenspeicher 22a verbunden. Die erste Recheneinheit 42a ist zumindest zu einer Verarbeitung und/oder Aufbereitung der, insbesondere übertragenen und/oder der zu übertragenden, Daten vorgesehen. Alternativ könnte die erste Kommunikationseinheit auch mehrere Induktivitäten und/oder Kondensatoren und/oder weitere Bauteile umfassen. Darüber hinaus ist denkbar, den ersten Datenspeicher 22a in die erste Recheneinheit 42a zu integrieren.

Ferner umfasst das Induktionsladesystem eine Ladevorrichtung 14a. Die Ladevorrichtung 14a ist separat von der Handwerkzeugmaschinenvorrichtung 10a ausgebildet. Die Ladevorrichtung 14a ist als Ladeplatte ausgebildet. Die Ladevorrichtung 14a ist als eine induktive Akkuladevorrichtung ausgebildet.

Die Ladevorrichtung 14a umfasst ein Ladegehäuse 44a. Das Ladegehäuse 44a weist eine zumindest im Wesentlichen ebene Aufnahmefläche 46a, insbesondere zum Aufstellen und/oder Auflegen der Handwerkzeugmaschinenvorrichtung 10a, insbesondere bei einem Ladevorgang, auf.

Die Ladevorrichtung 14a ist zu einem induktiven Laden der Handwerkzeugmaschinenvorrichtung 10a, insbesondere des Energiespeichers 36a der Handwerkzeugmaschinenvorrichtung 10a, vorgesehen, insbesondere mittels einer resonanten, induktiven Kopplung.

Dazu umfasst die Ladevorrichtung 14a eine Leistungselektronik 48a. Die Leistungselektronik 48a ist innerhalb des Ladegehäuses 44a angeordnet. Die Leistungselektronik 48a ist im vorliegenden Fall als Wechselrichter ausgebildet und dazu vorgesehen, eine gleichgerichtete Spannung einer Energiequelle in einen hochfrequenten Strom umzuwandeln und an einem Ausgang der Leistungselektronik 48a bereitzustellen.

Zudem umfasst die Ladevorrichtung 14a eine Energieübertragungseinheit 18a. Die Energieübertragungseinheit 18a ist in einem oberen Bereich der Ladevorrichtung 14a, insbesondere auf einer der Handwerkzeugmaschinenvorrichtung 10a und/oder der Aufnahmefläche 46a zugewandten Seite der Ladevorrichtung 14a, angeordnet. Die Energieübertragungseinheit 18a weist eine elektrische Verbindung mit der Leistungselektronik 48a, insbesondere dem Ausgang der Leistungselektronik 48a, auf. Die Energieübertragungseinheit 18a ist als elektrischer Schwingkreis ausgebildet. Die Energieübertragungseinheit 18a umfasst eine zweite Induktivität 50a und einen, insbesondere mit der zweiten Induktivität 50a in Reihe geschalteten, zweiten Kondensator 52a. Alternativ könnte eine Energieübertragungseinheit auch mehrere Induktivitäten und/oder Kondensatoren und/oder weitere Bauteile umfassen.

Darüber hinaus umfasst die Ladevorrichtung 14a ein zweite Kommunikationseinheit 16a. Die zweite Kommunikationseinheit 16a ist korrespondierend zu der ersten Kommunikationseinheit 12a ausgebildet. Die zweite Kommunikationseinheit 16a ist als Sende- und Empfängereinheit ausgebildet. Die zweite Kommunikationseinheit 16a ist als drahtlose Kommunikationseinheit ausgebildet. Die zweite Kommunikationseinheit 16a ist zu einer drahtlosen Kommunikation vorgesehen. Im vorliegenden Fall ist die zweite Kommunikationseinheit 16a zumindest teilweise einstückig mit der Energieübertragungseinheit 18a ausgebildet. Die zweite Kommunikationseinheit 16a ist dabei mit der Energieübertragungseinheit 18a identisch. Demnach ist die zweite Kommunikationseinheit 16a als elektrischer Schwingkreis ausgebildet und umfasst insbesondere die zweite Induktivität 50a und den, insbesondere mit der zweiten Induktivität 50a in Reihe geschalteten, zweiten Kondensator 52a. Die zweite Kommunikationseinheit 16a ist in zumindest einem Betriebszustand zu einer Übertragung und zu einem Empfang von, insbesondere von Energie abweichenden, Daten vorgesehen.

Dazu umfasst die Ladevorrichtung 14a einen zweiten Datenspeicher 24a. Der zweite Datenspeicher 24a ist mit der zweiten Kommunikationseinheit 16a verbunden. Der zweite Datenspeicher 24a ist dabei als Permanentspeicher ausgebildet. Der zweite Datenspeicher 24a dient zur zumindest temporären Speicherung der, insbesondere übertragenen und/oder der zu übertragenden, Daten.

Die Ladevorrichtung 14a umfasst ferner ein zweite Recheneinheit 54a. Die zweite Recheneinheit 54a umfasst eine zweite Steuerelektronik zum Betrieb der Ladevorrichtung 14a. Die zweite Recheneinheit 54a ist mit der zweiten Kommunikationseinheit 16a verbunden. Zudem ist die zweite Recheneinheit 54a mit dem zweiten Datenspeicher 24a verbunden. Die zweite Recheneinheit 54a ist zumindest zu einer Verarbeitung und/oder Aufbereitung der, insbesondere übertragenen und/oder der zu übertragenden, Daten vorgesehen. Alternativ könnte die zweite Kommunikationseinheit 16a auch mehrere Induktivitäten und/oder Kondensatoren und/oder weitere Bauteile umfassen. Darüber hinaus ist denkbar den zweiten Datenspeicher24a in die zweite Recheneinheit 54a zu integrieren.

Des Weiteren umfasst die Ladevorrichtung 14a im vorliegenden Fall eine Verbindungsschnittstelle 26a. Die Verbindungsschnittstelle 26a ist als Datenschnittstelle ausgebildet. Die Verbindungsschnittstelle 26a ist drahtlos ausgebildet. Im vorliegenden Fall ist die Verbindungsschnittstelle 26a als WLAN-Verbindungsschnittstelle ausgebildet. Die Verbindungsschnittstelle 26a dient zu einer Verbindung der Ladevorrichtung 14a mit einem externen, elektronischen Gerät 30a. Die Verbindungsschnittstelle 26a dient im vorliegenden Fall dazu, externe Programmierdaten zur Reprogrammierung der Handwerkzeugmaschinenvorrichtung 10a an die Ladevorrichtung 14a und insbesondere den zweiten Datenspeicher 24a zu übertragen. Die Verbindungsschnittstelle 26a könnte prinzipiell als beliebige von einer WLAN-Verbindungsschnittstelle abweichende, drahtlose Verbindungsschnittstelle ausgebildet sein.

Im vorliegenden Fall ist die Energieübertragungseinheit 18a in zumindest einem Zustand, insbesondere bei einem Ladevorgang, zu einer induktiven Energieübertragung auf die Energieempfängereinheit 20a vorgesehen, um den Energiespeicher 36a zu laden. Befindet sich die Handwerkzeugmaschinenvorrichtung 10a in unmittelbarer Nähe zu der Ladevorrichtung 14a ist die Leistungselektronik 48a dazu vorgesehen, einen, insbesondere periodischen, Wechselstrom zu erzeugen und hierdurch die zweite Induktivität 50a der Energieübertragungseinheit 18a anzuregen. Der Wechselstrom erzeugt dabei ein magnetisches Wechselfeld, welches insbesondere eine Frequenz zwischen 25 kHz und 150 kHz aufweist. Demnach ist die Energieübertragungseinheit 18a dazu vorgesehen, elektrische Energie in ein magnetisches Feld umzuwandeln. Das magnetische Wechselfeld induziert in der Energieempfängereinheit 20a, insbesondere der ersten Induktivität 38a, einen, insbesondere periodischen, weiteren Wechselstrom. Demnach ist die Energieempfängereinheit 20a dazu vorgesehen, ein magnetisches Feld in elektrische Energie umzuwandeln. Zudem ist die Energieempfängereinheit 20a dazu vorgesehen, die umgewandelte elektrische Energie dem Energiespeicher 36a zuzuführen, um diesen insbesondere aufzuladen.

Darüber hinaus sind die erste Kommunikationseinheit 12a und die zweite Kommunikationseinheit 16a dazu vorgesehen, zu einer, im vorliegenden Fall insbesondere bidirektionalen, Übertragung von Daten miteinander drahtlos zu kommunizieren. Dazu sind die erste Kommunikationseinheit 12a und die zweite Kommunikationseinheit 16a induktiv gekoppelt.

Im vorliegenden Fall ist die zweite Kommunikationseinheit 16a dazu vorgesehen, Programmierdaten, insbesondere aus dem zweiten Datenspeicher 24a, an die erste Kommunikationseinheit 12a zu übermitteln. Die Programmierdaten können vorab mittels des externen Geräts 30a und der Verbindungsschnittstelle 26a in dem zweiten Datenspeicher 24a hinterlegt werden. Die Programmierdaten können dabei beispielsweise zur Reprogrammierung der Handwerkzeugmaschinenvorrichtung 10a dienen und vorteilhaft mittels des Bootloaders der ersten Recheneinheit 42a zur Aktualisierung einer Softwarekomponente der Handwerkzeugmaschinenvorrichtung 10a verwendet und/oder weiterverarbeitet werden. Zudem ist die erste Kommunikationseinheit 12a dazu vorgesehen, Daten, im vorliegenden Fall insbesondere Daten über auftretende Fehler, Daten über einen Übertragungsstatus und/oder Daten über einen Aktualisierungsstatus, an die zweite Kommunikationseinheit 16a zu übertragen.

Im vorliegenden Fall erfolgt die Übertragung der Daten und die Übertragung der Energie zum induktiven Laden ferner gleichzeitig und insbesondere mittels derselben Bauteile, insbesondere der ersten Induktivität 38a und der zweiten Induktivität 50a. Demnach werden im vorliegenden Fall Daten mittels der Energieübertragungseinheit 18a und der Energieempfängereinheit 20a übertragen.

Insbesondere zur Realisierung dieser, insbesondere gleichzeitigen, Übertragung, weist die zweite Recheneinheit 54a wenigstens eine Modulationsroutine, insbesondere zur Modulation der Daten auf den der Energieübertragungseinheit 18a zugeführten Wechselstrom, auf. Zudem umfasst die erste Recheneinheit 42a wenigstens eine Demodulationsroutine, insbesondere zur Demodulation der Daten von dem von der Energieempfängereinheit 20a empfangenen weiteren Wechselstrom.

Hierdurch kann vorteilhaft eine Softwarekomponente der Handwerkzeugmaschinenvorrichtung 10a aktualisiert werden, insbesondere ohne die Handwerkzeugmaschinenvorrichtung 10a zu demontieren und insbesondere ohne spezielle Datenschnittstellen in die Handwerkzeugmaschinenvorrichtung 10a einzubringen, wodurch eine Betriebssicherheit erhöht und/oder Kosten verringert werden können. Alternativ ist denkbar, dass eine Datenübertragung und eine Energieübertragung in unterschiedlichen Betriebszuständen, insbesondere nicht gleichzeitig, erfolgt.

In Figur 3 umfasst die Handwerkzeugmaschinenvorrichtung 10b eine Verbindungsschnittstelle 28b. Die Verbindungsschnittstelle 28b ist als Datenschnittstelle ausgebildet. Die Verbindungsschnittstelle 28b ist drahtlos ausgebildet. Im vorliegenden Fall ist die Verbindungsschnittstelle 28b als WLAN-Verbindungsschnittstelle ausgebildet. Die Verbindungsschnittstelle 28b dient zu einer Verbindung der Handwerkzeugmashinenvorrichtung 10b mit dem externen, elektronischen Gerät 30b. Die Verbindungsschnittstelle 28b dient im vorliegenden Fall dazu, externe Daten zur Reprogrammierung der Ladevorrichtung 14b an die Handwerkzeugmaschinenvorrichtung 10b und insbesondere einen ersten Datenspeicher 22b der Handwerkzeugmaschinenvorrichtung 10b zu übertragen. Prinzipiell ist es denkbar, die Verbindungsschnittstelle 28b entsprechend Figur 2 als beliebige von einer WLAN-Verbindungsschnittstelle abweichende drahtlose Verbindungsschnittstelle auszubilden.

Darüber hinaus ist die erste Kommunikationseinheit 12b der Handwerkzeugmaschinenvorrichtung 10b dazu vorgesehen, Programmierdaten, insbesondere aus dem ersten Datenspeicher 22b, an die zweite Kommunikationseinheit 16b der Ladevorrichtung 14b zu übermitteln. Die Programmierdaten können vorab mittels des externen Geräts 30b und der Verbindungsschnittstelle 28b in dem ersten Datenspeicher 22b hinterlegt werden. Die Programmierdaten dienen zur Reprogrammierung der Ladevorrichtung 14b und werden vorteilhaft mittels eines Bootloaders der zweiten Recheneinheit 54b der Ladevorrichtung 14b zur Aktualisierung einer Softwarekomponente der Ladevorrichtung 14b verwendet und/oder weiterverarbeitet.

Zudem ist die zweite Kommunikationseinheit 16b dazu vorgesehen, Daten, im vorliegenden Fall insbesondere Daten über auftretende Fehler, Daten über einen Übertragungsstatus und/oder Daten über einen Aktualisierungsstatus, an die erste Kommunikationseinheit 12b zu übertragen. Hierdurch kann vorteilhaft eine Softwarekomponente der Ladevorrichtung 14b aktualisiert werden, insbesondere ohne die Ladevorrichtung 14b zu demontieren und insbesondere ohne spezielle Datenschnittstellen in die Ladevorrichtung 14b einzubringen, wodurch eine Betriebssicherheit erhöht und/oder Kosten verringert werden können. Alternativ ist denkbar, auf eine bidirektionale Übertragung von Daten zu verzichten.

## Patentansprüche

1. Induktionsladesystem, mit zumindest einer Handwerkzeugmaschinenvorrichtung (10a; 10b), welche einen Energiespeicher (36a) und eine Energieempfängereinheit (20a; 20b) aufweist, die zusätzlich als eine erste Kommunikationseinheit (12a; 12b) dient, und mit zumindest einer Ladevorrichtung (14a; 14b), welche zu einem induktiven Laden der Handwerkzeugmaschinenvorrichtung (10a; 10b) vorgesehen ist und welche zumindest eine Energieübertragungseinheit (18a; 18b) aufweist, die zusätzlich als eine zweite Kommunikationseinheit (16a; 16b) dient, wobei die erste Kommunikationseinheit (12a; 12b) und die zweite Kommunikationseinheit (16a; 16b) dazu vorgesehen sind, zumindest zu einer Übertragung von Daten drahtlos miteinander zu kommunizieren, wobei die Energieübertragungseinheit (18a; 18b) dazu vorgesehen ist, Energie beim induktiven Laden an die Handwerkzeugmaschinenvorrichtung (10a; 10b) zu übertragen, und die Energieempfängereinheit (20a; 20b) dazu vorgesehen ist, Energie beim induktiven Laden von der Ladevorrichtung (14a; 14b) zu empfangen, **dadurch gekennzeichnet, dass** die Ladevorrichtung (14a) eine als Datenschnittstelle ausgebildete, drahtlose Verbindungsschnittstelle (26a) zum Empfang von Programmierdaten eines externen, elektronischen Geräts (30a) aufweist, wobei die zweite Kommunikationseinheit (16a) dazu eingerichtet ist, die Programmierdaten an die erste Kommunikationseinheit (12a) zur Aktualisierung von Softwarekomponenten der Handwerkzeugmaschinenvorrichtung (10a) induktiv zu übertragen, und dass die Handwerkzeugmaschinenvorrichtung (10b) eine als Datenschnittstelle ausgebildete, drahtlose Verbindungsschnittstelle (28b) zum Empfang von Programmierdaten des externen, elektronischen Geräts (30b) aufweist, wobei die erste Kommunikationseinheit (12b) dazu eingerichtet ist, die Programmierdaten an die zweite Kommunikationseinheit (16b) zur Reprogrammierung der Ladevorrichtung (14a; 14b) zu übertragen.

2. Induktionsladesystem nach Anspruch 1, **dadurch gekennzeichnet, dass** die erste Kommunikationseinheit (12a; 12b) und die zweite Kommunikationseinheit (16a; 16b) jeweils zu einer bidirektionalen Übertragung der Programmierdaten vorgesehen sind.

3. Induktionsladesystem nach einem der vorhergehenden Ansprüche, **dadurch gekennzeichnet, dass** die Handwerkzeugmaschinenvorrichtung (10a; 10b) und/oder die Ladevorrichtung (14a; 14b) zumindest einen Datenspeicher (22a, 24a; 22b; 24b) zur zumindest temporären Speicherung der Programmierdaten aufweist.

4. Handwerkzeugmaschinenvorrichtung (10a; 10b) eines Induktionsladesystems nach einem der vorhergehenden Ansprüche.

5. Ladevorrichtung (14a; 14b) eines Induktionsladesystems nach einem der Ansprüche 1 bis 3.

## Claims

1. Induction charging system having at least one hand-held machine tool apparatus (10a; 10b) which has an energy store (36a) and an energy receiver unit (20a; 20b) that additionally serves as a first communication unit (12a; 12b), and having at least one charging apparatus (14a; 14b) which is provided for inductive charging of the hand-held machine tool apparatus (10a; 10b) and which has at least one energy transmission unit (18a; 18b) that additionally serves as a second communication unit (16a; 16b), wherein the first communication unit (12a; 12b) and the second communication unit (16a; 16b) are provided to communicate wirelessly with one another at least for data transmission, wherein the energy transmission unit (18a; 18b) is provided to transmit energy to the hand-held machine tool apparatus (10a; 10b) during inductive charging, and the energy receiver unit (20a; 20b) is provided to receive energy from the charging apparatus (14a; 14b) during inductive charging, **characterized in that** the charging apparatus (14a) has a wireless connection interface (26a) in the form of a data interface in order to receive programming data from an external electronic device (30a), wherein the second communication unit (16a) is configured to inductively transmit the programming data to the first communication unit (12a) in order to update software components of the hand-held machine tool apparatus (10a), and **in that** the hand-held machine tool apparatus (10b) has a wireless connection interface (28b) in the form of a data interface in order to receive programming data from the external electronic device (30b), wherein the first communication unit (12b) is configured to transmit the programming data to the second communication unit (16b) in order to reprogram the charging apparatus (14a; 14b).

2. Induction charging system according to Claim 1, **characterized in that** the first communication unit (12a; 12b) and the second communication unit (16a; 16b) are provided in each case for bidirectional transmission of the programming data.

3. Induction charging system according to either of the preceding claims, **characterized in that** the hand-held machine tool apparatus (10a; 10b) and/or the charging apparatus (14a; 14b) have/has at least one data memory (22a, 24a; 22b; 24b) in order to at least temporarily store the programming data.

4. Hand-held machine tool apparatus (10a; 10b) of an induction charging system according to one of the preceding claims.

5. Charging apparatus (14a; 14b) of an induction charging system according to one of Claims 1 to 3.

## Revendications

1. Système de charge par induction, comprenant au moins un dispositif de machine-outil manuelle (10a ; 10b), lequel possède un accumulateur d'énergie (36a) et une unité de réception d'énergie (20a ; 20b) qui sert en plus de première unité de communication (12a ; 12b), et comprenant au moins un dispositif de charge (14a ; 14b), lequel est prévu pour une charge inductive du dispositif de machine-outil manuelle (10a ; 10b) et lequel possède au moins une unité de transmission d'énergie (18a ; 18b) qui sert en plus de deuxième unité de communication (16a ; 16b), la première unité de communication (12a ; 12b) et la deuxième unité de communication (16a ; 16b) étant prévues pour communiquer entre elles sans fil au moins pour une transmission de données, l'unité de transmission d'énergie (18a ; 18b) étant prévue pour transmettre de l'énergie au dispositif de machine-outil manuelle (10a ; 10b) lors de la charge inductive et l'unité de réception d'énergie (20a ; 20b) étant prévue pour recevoir de l'énergie de la part du dispositif de charge (14a ; 14b) lors de la charge inductive, **caractérisé en ce que** le dispositif de charge (14a) possède une interface de liaison (26a) sans fil, réalisée sous la forme d'une interface de données et servant à la réception de données de programmation d'un appareil électronique (30a) externe, la deuxième unité de communication (16a) étant conçue pour transmettre de manière inductive les données de programmation à la première unité de communication (12a) en vue d'actualiser des composants logiciels du dispositif de machine-outil manuelle (10a) et **en ce que** le dispositif de machine-outil manuelle (10b) possède une interface de liaison (28b) sans fil, réalisée sous la forme d'une interface de données et servant à la réception de données de programmation de l'appareil électronique (30b) externe, la première unité de communication (12b) étant conçue pour transmettre les données de programmation à la deuxième unité de communication (16b) en vue de la reprogrammation du dispositif de charge (14a ; 14b).

2. Système de charge par induction selon la revendication 1, **caractérisé en ce que** la première unité de communication (12a ; 12b) et la deuxième unité de communication (16a ; 16b) sont respectivement prévues pour une transmission bidirectionnelle des données de programmation.

3. Système de charge par induction selon l'une des revendications précédentes, **caractérisé en ce que** le dispositif de machine-outil manuelle (10a ; 10b) et/ou le dispositif de charge (14a ; 14b) possèdent au moins une mémoire de données (22a, 24a ; 22b, 24b) servant à la mémorisation au moins temporaire des données de programmation.

4. Dispositif de machine-outil manuelle (10a ; 10b) d'un système de charge par induction selon l'une des revendications précédentes.

5. Dispositif de charge (14a ; 14b) d'un système de charge par induction selon l'une des revendications 1 à 3.
